(19) Europäisches Patentamt
European Patent Office
Office européen des brevets

(11) EP 4 243 147 A1

(12) # EUROPEAN PATENT APPLICATION
published in accordance with Art. 153(4) EPC

(43) Date of publication:
**13.09.2023 Bulletin 2023/37**

(21) Application number: **21889404.6**

(22) Date of filing: **08.10.2021**

(51) International Patent Classification (IPC):
***H01M 10/0567*** *(2010.01)* ***H01M 10/0569*** *(2010.01)*
***H01M 10/052*** *(2010.01)*

(52) Cooperative Patent Classification (CPC):
**H01M 10/052; H01M 10/0567; H01M 10/0569;**
Y02E 60/10

(86) International application number:
**PCT/KR2021/013943**

(87) International publication number:
**WO 2022/097939 (12.05.2022 Gazette 2022/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.11.2020 KR 20200148014**

(71) Applicant: **Samsung SDI Co., Ltd.**
**Yongin-si, Gyeonggi-do 17084 (KR)**

(72) Inventors:
- **PARK, Hyejin**
**Yongin-si, Gyeonggi-do 17084 (KR)**
- **KOH, Sujeong**
**Yongin-si, Gyeonggi-do 17084 (KR)**
- **KIM, Dahyun**
**Yongin-si, Gyeonggi-do 17084 (KR)**
- **KIM, Myunghoon**
**Yongin-si, Gyeonggi-do 17084 (KR)**
- **KIM, Sanghyung**
**Yongin-si, Gyeonggi-do 17084 (KR)**
- **KIM, Sanghoon**
**Yongin-si, Gyeonggi-do 17084 (KR)**
- **OH, Seungryong**
**Yongin-si, Gyeonggi-do 17084 (KR)**

(74) Representative: **Gulde & Partner**
**Patent- und Rechtsanwaltskanzlei mbB**
**Wallstraße 58/59**
**10179 Berlin (DE)**

(54) **NON-AQUEOUS ELECTROLYTE FOR LITHIUM SECONDARY BATTERY AND LITHIUM SECONDARY BATTERY COMPRISING SAME**

(57) Provided are a non-aqueous electrolyte for a lithium secondary battery and a lithium secondary battery including same, in which the non-aqueous electrolyte comprises: a non-aqueous organic solvent; a lithium salt; and a first additive represented by Chemical Formula 1 and a second additive represented by Chemical Formula 2 in a ratio of 0.5:1 to 10:1 by weight.

FIG. 1

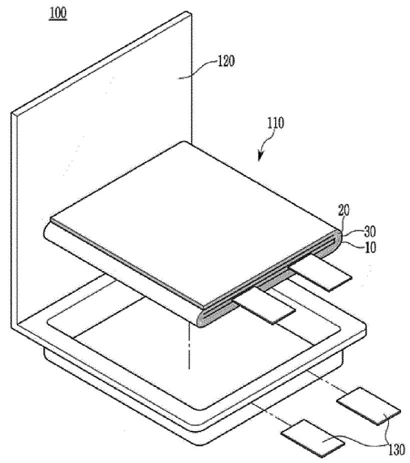


EP 4 243 147 A1

## Description

### TECHNICAL FIELD

It relates to a non-aqueous electrolyte for a lithium secondary battery and a lithium secondary battery including the same.

### Background Art

Lithium secondary batteries are attracting attention as power sources for various electronic devices because of a high discharge voltage and a high energy density.

As for positive active materials of lithium secondary batteries, a lithium-transition metal oxide having a structure capable of intercalating lithium ions such as $LiCoO_2$, $LiMn_2O_4$, $LiNi_{1-x}Co_xO_2$ ($0 < x < 1$), and the like has been used.

As for negative active materials, various carbon-based materials such as artificial graphite, natural graphite, and hard carbon capable of intercalating and deintercalating lithium ions have been used. As electrolytes for a lithium secondary battery, organic solvents in which lithium salts are dissolved have been used.

### TECHNICAL PROBLEM

One embodiment provides a non-aqueous electrolyte for a lithium secondary battery exhibiting improved high temperature-safety by suppressing gas generation at high temperatures.

Another embodiment provides a lithium secondary battery including the non-aqueous electrolyte.

### TECHNICAL SOLUTION

According to one embodiment, an electrolyte for a lithium secondary battery including a non-aqueous organic solvent a lithium salt and a first additive represented by Chemical Formula 1 and a second additive represented Chemical Formula 2, and a mixing ratio of the first additive and the second additive is 0.5:1 to 10:1 by weight.

[Chemical Formula 1]

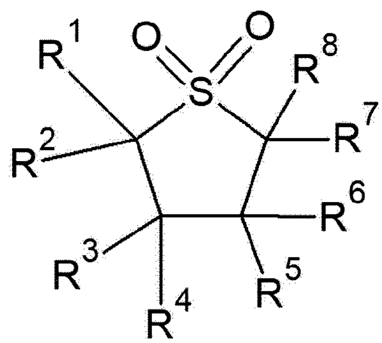

(In Chemical Formula 1,
$R^1$ to $R^8$ are each independently a hydrogen atom, a substituted or unsubstituted C1 to C30 alkyl group, a substituted or unsubstituted C2 to C30 alkenyl group, a substituted or unsubstituted C2 to C30 alkynyl group, a substituted or unsubstituted C3 to C30 cycloalkyl group, a substituted or unsubstituted C3 to C30 cycloalkenyl group, a substituted or unsubstituted C3 to C30 cycloalkynyl group, or a substituted or unsubstituted C6 to C30 aryl group.)

[Chemical Formula 2]

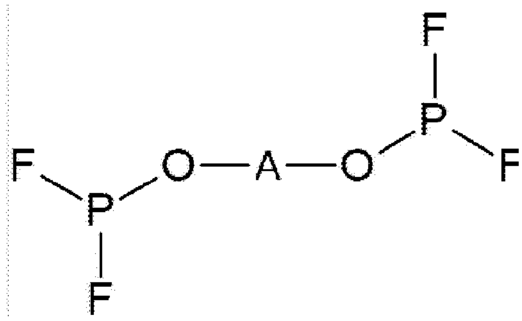

(In Chemical Formula 2, A is a substituted or unsubstituted aliphatic chain or $(-C_2H_4-O-C_2H_4-)_n$, and n is an integer of 1 to 10.)

In Chemical Formula 1, $R^1$ to $R^8$ may each independently be hydrogen atom, a substituted or unsubstituted C1 to C10 alkyl group, a substituted or unsubstituted C2 to C10 alkenyl group, a substituted or unsubstituted C2 to C10 alkynyl group, a substituted or unsubstituted C3 to C10 cycloalkyl group, a substituted or unsubstituted C3 to C10 cycloalkenyl group, a substituted or unsubstituted C3 to C10 cycloalkynyl group, or a substituted or unsubstituted C6 to C10 aryl group.

The mixing ratio of the first additive and the second additive may be 0.5:1 to 5:1 by weight.

In one embodiment, an amount of the first additive may be 0.25 wt% or more and less than 10 wt% when amounts of the non-aqueous organic solvent and the lithium salt are to be 100 wt%, and an amount of the first additive may be 0.5 wt% to 5 wt%, when amounts of the non-aqueous organic solvent and the lithium salt are to be 100 wt%.

An amount of the second additive may be 0.1 wt% or more, and less than 10 wt%, when amounts of the non-aqueous organic solvent and the lithium salt are to be 100 wt%, and an amount of the second additive may be 0.1 wt% to 5 wt% when amounts of the non-aqueous organic solvent and the lithium salt are to be 100 wt%.

The non-aqueous organic solvent may include a propionate-based solvent.

The propionate-based solvent may be methyl propionate, ethyl propionate, propyl propionate, or combinations thereof. In addition, an amount of the propionate-based solvent may be 30 volume% to 80 volume% based on the total volume of the non-aqueous organic solvent.

Another embodiment provides a lithium secondary battery including the non-aqueous electrolyte, a positive electrode, and a negative electrode. Other embodiments are included in the following detailed description.

## ADVANTAGEOUS EFFECTS

An electrolyte for a lithium secondary battery according to one embodiment of the present invention may suppress gas generation at high temperatures and thus it may provide a lithium secondary battery exhibiting good high-temperature safety.

## BRIEF DESCRIPTION OF THE DRAWINGS

FIG. 1 is a schematic view of a lithium secondary battery according to an embodiment.

## MODE FOR INVENTION

Hereinafter, embodiments of the present invention are described in detail. However, these embodiments are examples, the present invention is not limited thereto, and the present invention is defined by the scope of claims.

In the specification, when a definition is not otherwise provided, the term 'substituted' refers to one in which hydrogen of a compound is substituted with a substituent selected from a halogen atom (F, Br, Cl, or I ), a hydroxy group, an alkoxy group, a nitro group, a cyano group, an amino group, an azido group, an amidino group, a hydrazine group, a hydrazono group, a carbonyl group, a carbamyl group, a thiol group, an ester group, a carboxyl group or a salt thereof, a sulfonic acid group or a salt thereof, phosphoric acid or a salt thereof, a C1 to C20 alkyl group, a C2 to C20 alkenyl group, a C2 to C20 alkynyl group, a C6 to C30 aryl group, a C7 to C30 arylalkyl group, a C1 to C4 alkoxy group, a C1 to C20 heteroalkyl group, a C3 to C20 heteroarylalkyl group, a C3 to C30 cycloalkyl group, a C3 to C15 cycloalkenyl group, a C6 to C15 cycloalkynyl group, a C2 to C20 heterocycloalkyl group, or a combination thereof.

A non-aqueous electrolyte for a lithium secondary battery according to one embodiment includes a non-aqueous organic solvent, a lithium salt, a first additive represented by Chemical Formula 1, and a second additive represented by Chemical Formula 2.

[Chemical Formula 1]

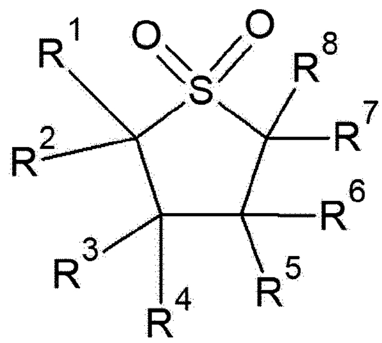

In Chemical Formula 1,

$R^1$ to $R^8$ are each independently a hydrogen atom, a substituted or unsubstituted C1 to C30 alkyl group, a substituted or unsubstituted C2 to C30 alkenyl group, a substituted or unsubstituted C2 to C30 alkynyl group, a substituted or unsubstituted C3 to C30 cycloalkyl group, a substituted or unsubstituted C3 to C30 cycloalkenyl group, a substituted or unsubstituted C3 to C30 cycloalkynyl group, or a substituted or unsubstituted C6 to C30 aryl group.

In one embodiment, the $R^1$ to $R^8$ may each independently be a hydrogen atom, a substituted or unsubstituted C1 to C10 alkyl group, a substituted or unsubstituted C2 to C10 alkenyl group, a substituted or unsubstituted C2 to C10 alkynyl group, a substituted or unsubstituted C3 to C10 cycloalkyl group, a substituted or unsubstituted C3 to C10 cycloalkenyl group, a substituted or unsubstituted C3 to C10 cycloalkynyl group, or a substituted or unsubstituted C6 to C10 aryl group.

[Chemical Formula 2]

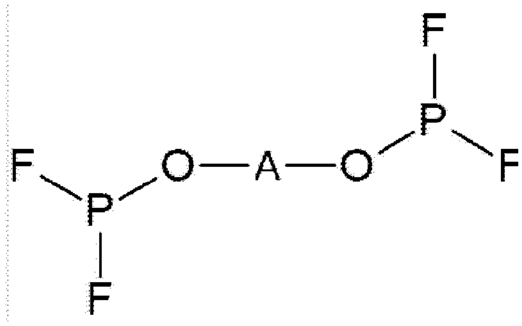

In Chemical Formula 2, A is a substituted or unsubstituted aliphatic chain or $(-C_2H_4-O-C_2H_4-)_n$, and n is an integer of 1 to 10.

According to one embodiment, the A may be a C2 to C20 hydrocarbon chain or $(-C_2H_4-O-C_2H_4-)_n$, and n may be an integer of 1 to 5.

Herein, a mixing ratio of the first additive and the second additive may be 0.5:1 to 10:1 by weight, 0.5:1 to 5:1 by weight, or 1:1 to 5:1 by weight.

The electrolyte for the lithium secondary battery according to one embodiment includes both a first additive and a second additive, and particularly, in a weight ratio of 0.5:1 to 10:1 by weight, and the first additive may form a rigid thin layer on a surface of a positive electrode, thereby preventing the deterioration of the positive electrode at high temperature, and the second additive may be reduction-decomposed to form a thin layer on a surface of a negative electrode, thereby suppressing breakdown of an SEI layer due to a side reaction of the electrolyte at high temperatures. Furthermore, the second additive may render to stabilize the lithium salt so that elution of the metal from the positive active material by generation of HF and decomposition of a solvent due to the decomposition of the lithium salt decomposition may be suppressed.

Using of the both the first additive and the second additive allows formation of a suitable thin layer on the positive electrode and the negative electrode, thereby not largely increasing the initial thickness and inhibiting the deterioration of the positive electrode and the decomposition of the thin layer of the negative electrode at high temperatures, and thus, a generated amount of gas may be effectively reduced during storage at high temperatures. Even

though both the first additive and the second additive are included, if the mixing ratio is out of the range, that is, the first additive is used in an amount of less than 1/2 times that of the second additive, high-temperature characteristics may be deteriorated, and when the first additive is used in an amount of more than 10 times that of the second additive, the viscosity of the electrolyte is increased to deteriorate the charge characteristics of the battery.

The effects of using both the first additive and the second additive may be realized by only using the compound represented by Chemical Formula 1 as the first additive.

Such effects may be obtained as the compound of Chemical Formula 1 may from a firm film on a surface of the positive electrode, rather than a compound such as a sulfoxide, even though the compound of Chemical Formula 1 includes sulfur. Accordingly, when any compound including sulfur, but not having the structure of Chemical Formula 1 is used as the first additive, effects derived therefrom are insufficient which is undesired.

Herein, an amount of the first additive represented by Chemical Formula 1 may be 0.25 wt% or more and less than 10 wt% based on the weight of the non-aqueous organic solvent and the lithium salt, that is, the amounts of the non-aqueous organic solvent and the a lithium salt are to be 100 wt% (based on the total, 100 wt%, of the non-aqueous organic solvent and the lithium salt), and according to one embodiment, may be 0.5 wt% to 5 wt%. When the amount of the first additive represented by Chemical Formula 1 is satisfied in the range, the high-temperature reliability characteristics, for example, the improvement in high-temperature capacity retention and the decrease in high temperature resistance may be realized.

Furthermore, the amount of the second additive represented by Chemical Formula 2 may be 0.1 wt% or more and less than 10 wt% based on the weight of the non-aqueous organic solvent and the lithium salt, that is, the amounts of the non-aqueous organic solvent and the lithium salt are to be 100 wt% (based on the total, 100 wt%, of the non-aqueous organic solvent and the lithium salt), and according to one embodiment, 0.1 wt% to 5 wt%, or 0.1 wt% to 3 wt%. When the amount of the second additive represented by Chemical Formula 2 is satisfied in the range, the high-temperature reliability characteristics, for example, the improvement in high-temperature capacity retention and the decrease in high temperature resistance, may be realized.

In the electrolyte according to one embodiment, the non-aqueous organic solvent may include a carbonate-based solvent, and may further include a propionate-based solvent. The propionate-based solvent may be methyl propionate, ethyl propionate, propyl propionate, or combinations thereof. When the propionate-based solvent is used in a mixture, the mixing ratio may be suitably controlled.

In the non-aqueous organic solvent, an amount of the propionate-based solvent may be 30 volume% to 80 volume% based on the total volume of the non-aqueous organic solvent, and according to one embodiment, may be 40 volume% to 80 volume%. When the amount of the propionate-based solvent is within the range, the electrolyte solution impregnation may be improved.

The carbonate-based solvent may be dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), or combinations thereof. When the carbonate-based solvent is used in a mixture, the mixing ratio may be suitably controlled. Furthermore, the carbonate-based solvent may desirably include a mixture with a cyclic carbonate and a linear carbonate. Herein, the cyclic carbonate and the linear carbonate are mixed together in a volume ratio of about 1:1 to about 1:9, and when the mixture is used as an electrolyte, it may have enhanced performance.

In one embodiment, the non-aqueous organic solvent may further include an ester-based, ether-based, ketone-based, alcohol-based, or aprotic solvent.

The ester-based solvent may be methyl acetate, ethyl acetate, n-propyl acetate, t-butyl acetate, methyl propionate, ethyl propionate, propyl propionate, $\gamma$-butyrolactone, decanolide, valerolactone, mevalonolactone, caprolactone, and the like.

The ether-based solvent may be dibutyl ether, tetraglyme, diglyme, dimethoxyethane, 2-methyltetrahydrofuran, tetrahydrofuran, and the like, and the ketone-based solvent may be cyclohexanone, and the like.

The alcohol-based solvent may include ethyl alcohol, isopropyl alcohol, and the like, and the aprotic solvent may include nitriles such as T-CN (where T is a C2 to C20 linear, branched, or cyclic hydrocarbon, and may include a double bond, an aromatic ring, or an ether bond), amides such as dimethylformamide, dioxolanes such as 1,3-dioxolane, and the like.

In addition, the organic solvent may further include an aromatic hydrocarbon-based solvent. The aromatic hydrocarbon-based organic solvent may be an aromatic hydrocarbon-based compound represented by Chemical Formula 3.

[Chemical Formula 3]

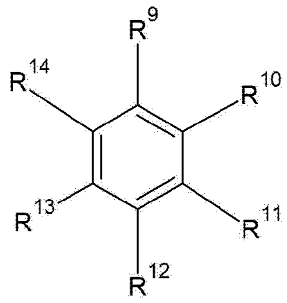

(In Chemical Formula 3, $R^9$ to $R^{14}$ are the same or different, and are selected from hydrogen, a halogen, a C1 to C10 alkyl group, a haloalkyl group, and a combination thereof.)

Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, or combinations thereof.

The electrolyte may further include vinyl ethyl carbonate, vinylene carbonate, or an ethylene carbonate-based compound represented by Chemical Formula 4, as an additive for improving cycle life.

[Chemical Formula 4]

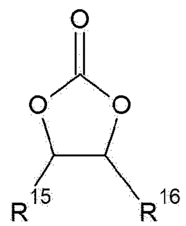

(In Chemical Formula 4, $R^{15}$ and $R^{16}$ are the same or different and may each independently be hydrogen, a halogen, a cyano group (CN), a nitro group ($NO_2$), or a C1 to C5 fluoroalkyl group, provided that at least one of $R_7$ and $R_8$ is a halogen, a cyano group (CN), a nitro group ($NO_2$), or a C1 to C5 fluoroalkyl group, and $R_7$ and $R_8$ are not simultaneously hydrogen.)

Examples of the ethylene carbonate-based compound may be difluoro ethylene carbonate, chloroethylene carbonate, dichloroethylene carbonate, bromoethylene carbonate, dibromoethylene carbonate, nitroethylene carbonate, cyanoethylene carbonate, or fluoroethylene carbonate, and the like. An amount of the additive for improving the cycle-life characteristics may be used within an appropriate range.

The lithium salt dissolved in an organic solvent supplies a battery with lithium ions, basically operates the rechargeable lithium battery, and improves transportation of the lithium ions between a positive electrode and a negative electrode. Examples of the lithium salt include at least one or two supporting salts selected from $LiPF_6$, $LiSbF_6$, $LiAsF_6$, $LiPO_2F_2$, $LiN(SO_2C_2F_5)_2$, $Li(CF_3SO_2)_2N$, $LiN(SO_3C_2F_5)_2$, $Li(FSO_2)_2N$ (lithium bis(fluorosulfonyl)imide: LiFSI), $LiC_4F_9SO_3$, $LiClO_4$, $LiAlO_2$, $LiAlCl_4$, $LiPO_2F_2$, $LiN(C_xF_{2x+1}SO_2)(C_yF_{2y+i1}SO_2)$, wherein x and y are natural numbers, for example, an integer of 1 to 20), lithium difluoro(bisoxolato) phosphate), LiCl, LiI, $LiB(_2O_4)_2$ (lithium bis(oxalato) borate: LiBOB), and lithium difluoro(oxalato)borate (LiDFOB). A concentration of the lithium salt may range from about 0.1 M to about 2.0 M. When the lithium salt is included at the above concentration range, an electrolyte may have excellent performance and lithium ion mobility due to optimal electrolyte conductivity and viscosity.

One embodiment provides a lithium secondary battery including the non-aqueous electrolyte.

The lithium secondary battery includes the non-aqueous electrolyte, a negative electrode, and a positive electrode.

In one embodiment, the negative electrode includes a negative active material layer including a negative active

material and a current collector supported thereon.

The negative active material includes a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may be a carbon material that may be any generally-used carbon-based negative active material used in a lithium secondary battery. Examples thereof may be crystalline carbon, amorphous carbon, or a combination thereof. The crystalline carbon may be shapeless (unspecified shape), or may be sheet, flake, spherical, or fiber shaped natural graphite or artificial graphite, and the amorphous carbon may be soft carbon or hard carbon, a mesophase pitch carbonized product, fired cokes, and the like.

The lithium metal alloy may be an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be Si, $SiO_x$ ($0 < x < 2$), a Si-Q alloy (wherein Q is an element selected from an alkali metal, an alkaline-earth metal, a Group 13 element, a Group 14 element, a Group 15 element, a Group 16 element, a transition metal, a rare earth element, and a combination thereof, and not Si), Sn, $SnO_2$, a Sn-R alloy (wherein R is an element selected from an alkali metal, an alkaline-earth metal, a Group 13 element, a Group 14 element, a Group 15 element, a Group 16 element, a transition metal, a rare earth element, and a combination thereof, and not Sn), and the like, and at least one of these materials may be mixed with $SiO_2$. The elements Q and R may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

The transition elements oxide may be a lithium titanium oxide.

The negative active material according to one embodiment may include a Si-C composite including a Si-based active material and a carbon-based active material.

The Si-based active material is Si, $SiO_x$ ($0 < x < 2$), or a Si-Q alloy (wherein Q is an element selected from an alkali metal, an alkaline-earth metal, a Group 13 element, a Group 14 element, a Group 15 element, a Group 16 element, a transition metal, a rare earth element, and a combination thereof thereof, and not Si).

An average particle diameter of the Si-based active material may be 50 nm to 200 nm.

When the particle diameter of the Si particle is within the range, the volume expansion caused during charge and discharge may be suppressed, and breakage of the conductive path due to crushing of particles may be prevented.

The Si-based active material may be included in an amount of 1 wt% to 60 wt% based on the total weight of the Si-C composite, and for example, 3 wt% to 60 wt%.

The negative active material according to another embodiment may further include a crystalline carbon in addition to the Si-C composite.

If the negative active material includes both the Si-C composite and crystalline carbon, the Si-C composite and the crystalline carbon may be included in the form of a mixture, and herein, the Si-C composite and the crystalline carbon may be included at a weight ratio of 1:99 to 50:50. More specifically, the Si-C composite and the crystalline carbon may be included in a weight ratio of 5:95 to 20:80.

The crystalline carbon, may, for example, include graphite, and more specifically, may include natural graphite, artificial graphite, or mixtures thereof.

The crystalline carbon may have an average particle diameter of 5 $\mu$m to 30 $\mu$m.

In the specification, the average a particle diameter refers to a particle size (D50) where a cumulative volume is 50 volume% in a cumulative size-distribution curve.

The Si-C composite may further include a shell surrounded on a surface of the Si-C composite, and the shell may include amorphous carbon. A thickness of the shell may be 5 nm to 100 nm.

The amorphous carbon may be soft carbon, hard carbon, mesophase pitch carbide, a sintered coke, or a mixture thereof.

The amorphous carbon may be included at an amount of 1 part by weight to 50 parts by weight based on 100 parts by weight of the carbon-based active material, for example, 5 parts by weight to 50 parts by weight, or 10 parts by weight to 50 parts by weight.

The negative active material layer may further include a conductive material.

In the negative active material layer, an amount of the negative active material may be about 95 wt% to about 99 wt% based on the negative active material layer. An amount of the binder may be about 1 wt% to about 5 wt% based on the total, 100 wt%, of the negative active material layer. Further, when the negative active material layer includes a conductive material, the negative active material layer includes about 90 wt% to about 98 wt% of the negative active material, about 1 wt% to about 5 wt% of the binder, and about 1 wt% to about 5 wt% of the conductive material.

The binder improves binding properties of negative active material particles with one another and with a current collector. The binder includes a non-aqueous binder, an aqueous binder, or a combination thereof.

The non-aqueous binder may be an ethylene propylene copolymer, polyacrylonitrile, polystyrene, polyvinylchloride, carboxylated polyvinylchloride, polyvinyl fluoride, polyurethane, polytetrafluoroethylene, polyvinylidene fluoride, polyethylene, polypropylene, polyamideimide, polyimide, or combinations thereof.

The aqueous binder may include styrene-butadiene rubber, an acrylated styrene-butadiene rubber, an acrylonitrile-butadiene rubber, an acrylic rubber, a butyl rubber, a fluorine rubber, an ethylene oxide-containing polymer, polyvinylpyrrolidone, polyepichlorohydrin, polyphosphazene, an ethylene propylene diene copolymer, polyvinylpyridine, chlorosulfonated polyethylene, latex, a polyester resin, an acrylic resin, a phenolic resin, an epoxy resin, polyvinyl alcohol, or combinations thereof.

When the aqueous binder is used as a negative electrode binder, a cellulose-based compound may be further used to provide viscosity as a thickener. The cellulose-based compound includes one or more of carboxymethyl cellulose, hydroxypropyl methyl cellulose, methyl cellulose, or alkali metal salts thereof. The alkali metal may be Na, K, or L. The thickener may be included in an amount of about 0.1 parts by weight to about 3 parts by weight based on 100 parts by weight of the negative active material.

The conductive material is included to provide electrode conductivity, and any electrically conductive material may be used as a conductive material unless it causes a chemical change. Examples of the conductive material may be a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The current collector may include one selected from a copper foil, a nickel foil, a stainless steel foil, a titanium foil, a nickel foam, a copper foam, a polymer substrate coated with a conductive metal, and a combination thereof, but is not limited thereto.

In one embodiment, the positive electrode including the positive active material includes a positive active material layer including the positive active material and a current collector supporting the positive active material layer.

The positive electrode active material may include lithiated intercalation compounds that reversibly intercalate and deintercalate lithium ions, and specifically, one or more composite oxides of a metal selected from cobalt, manganese, nickel, and a combination thereof, and lithium may be used. More specifically, the compounds represented by one of the following chemical formulae may be used. $Li_aA_{1-b}X_bD_2$ ($0.90 \le a \le 1.8$, $0 \le b \le 0.5$); $Li_aA_{1-b}X_bO_{2-c}D_c$ ($0.90 \le a \le 1.8$, $0 \le b \le 0.5$, $0 \le c \le 0.05$); $Li_aE_{1-b}X_bO_{2-c}D_c$ ($0.90 \le a \le 1.8$, $0 \le b \le 0.5$, $0 \le c \le 0.05$); $Li_aE_{2-b}X_bO_{4-c}D_c$ ($0.90 \le a \le 1.8$, $0 \le b \le 0.5$, $0 \le c \le 0.05$); $Li_aNi_{1-b-c}Co_bX_cD_\alpha$ ($0.90 \le a \le 1.8$, $0 \le b \le 0.5$, $0 \le c \le 0.5$, $0 < \alpha \le 2$); $Li_aNi_{1-b-c}Co_bX_cO_{2-\alpha}T_\alpha$ ($0.90 \le a \le 1.8$, $0 \le b \le 0.5$, $0 \le c \le 0.5$, $0 < \alpha < 2$); $Li_aNi_{1-b-c}Co_bX_cO_{2-\alpha}T_2$ ($0.90 \le a \le 1.8$, $0 \le b \le 0.5$, $0 \le c \le 0.5$, $0 < \alpha < 2$); $Li_aNi_{1-b-c}Mn_bX_cD_\alpha$ ($0.90 \le a \le 1.8$, $0 \le b \le 0.5$, $0 \le c \le 0.5$, $0 < \alpha \le 2$); $Li_aNi_{1-b-c}Mn_bX_cO_{2-\alpha}T_\alpha$ ($0.90 \le a \le 1.8$, $0 \le b \le 0.5$, $0 \le c \le 0.5$, $0 < \alpha < 2$); $Li_aNi_{1-b-c}Mn_bX_cO_{2-\alpha}T_2$ ($0.90 \le a \le 1.8$, $0 \le b \le 0.5$, $0 \le c \le 0.5$, $0 < \alpha < 2$); $Li_aNi_bE_cG_dO_2$ ($0.90 \le a \le 1.8$, $0 \le b \le 0.9$, $0 \le c \le 0.5$, $0.001 \le d \le 0.1$); $Li_aNi_bCo_cMn_dG_eO_2$ ($0.90 \le a \le 1.8$, $0 \le b \le 0.9$, $0 \le c \le 0.5$, $0 \le d \le 0.5$, $0.001 \le e \le 0.1$); $Li_aNiG_bO_2$ ($0.90 \le a \le 1.8$, $0.001 \le b \le 0.1$) $Li_aCoG_bO_2$ ($0.90 \le a \le 1.8$, $0.001 \le b \le 0.1$); $Li_aMn_{1-b}G_bO_2$ ($0.90 \le a \le 1.8$, $0.001 \le b \le 0.1$); $Li_aMn_2G_bO_4$ ($0.90 \le a \le 1.8$, $0.001 \le b \le 0.1$); $Li_aMn_{1-g}G_gPO_4$ ($0.90 \le a \le 1.8$, $0 \le g \le 0.5$); $QO_2$; $QS_2$; $LiQS_2$; $V_2O_5$; $LiV_2O_5$; $LiZO_2$; $LiNiVO_4$ $Li_{(3-f)}J_2(PO_4)_3$ ($0 \le f \le 2$); $Li_{(3-f)}Fe_2(PO_4)_3$ ($0 \le f \le 2$); $Li_aFePO_4$ ($0.90 \le a \le 1.8$)

In the above chemical formulae, A is selected from Ni, Co, Mn, and a combination thereof; X is selected from Al, Ni, Co, Mn, Cr, Fe, Mg, Sr, V, a rare earth element, and a combination thereof; D is selected from O, F, S, P, and a combination thereof; E is selected from Co, Mn, and a combination thereof; T is selected from F, S, P, and a combination thereof; G is selected from Al, Cr, Mn, Fe, Mg, La, Ce, Sr, V, and a combination thereof; Q is selected from Ti, Mo, Mn, and a combination thereof; Z is selected from Cr, V, Fe, Sc, Y, and a combination thereof; and J is selected from V, Cr, Mn, Co, Ni, Cu, and a combination thereof.

Also, the compounds may have a coating layer on the surface, or may be mixed with another compound having a coating layer. The coating layer may include at least one coating element compound selected from the group consisting of an oxide of a coating element, a hydroxide of a coating element, an oxyhydroxide of a coating element, an oxycarbonate of a coating element, and a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed in a method having no adverse influence on properties of a positive electrode active material by using these elements in the compound, and for example, the method may include any coating method such as spray coating, dipping, and the like, but is not illustrated in more detail since it is well-known in the related field.

In the positive electrode, an amount of the positive active material may be about 90 wt% to about 98 wt% based on the total weight of the positive active material layer.

In one embodiment, the positive active material layer may further include a binder and a conductive material. Herein, the amount of the binder and the conductive material may be 1 wt% to 5 wt%, respectively, based on the total amount of the positive active material layer.

The binder improves binding properties of positive electrode active material particles with one another and with a current collector, and examples of the binder may be polyvinyl alcohol, carboxymethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene,

styrene butadiene rubber, acrylated styrene butadiene rubber, an epoxy resin, nylon, and the like, but are not limited thereto.

The conductive material is included to provide electrode conductivity, and any electrically conductive material may be used as a conductive material unless it causes a chemical change. Examples of the conductive material include a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The current collector may use aluminum foil, nickel foil, or a combination thereof, but is not limited thereto.

The positive active material layer and the negative active material layer may be formed by mixing an active material, a binder, and optionally a conductive material in a solvent to prepare an active material composition and coating the active material composition on a current collector. Such an active material layer preparation method is well known and thus is not described in detail in the present specification. The solvent includes N-methyl pyrrolidone and the like, but is not limited thereto. In addition, when the binder is a water-soluble binder in the negative active material layer, the solvent used for preparing the negative active material composition may be water.

Furthermore, a separator may be disposed between the positive electrode and the negative electrode depending on a type of a rechargeable lithium battery. The separator may use polyethylene, polypropylene, polyvinylidene fluoride, or multi-layers thereof having two or more layers, and may be a mixed multilayer such as a polyethylene/polypropylene double-layered separator, a polyethylene/polypropylene/polyethylene triple-layered separator, a polypropylene/polyethylene/polypropylene triple-layered separator, and the like.

According to one embodiment, the separator may also be a composite porous separator including a porous substrate and a functional layer positioned on the porous substrate. The functional layer may have additional functions, and for example, may be at least one of a heat-resistance layer and an adhesive layer. The heat-resistance layer may include a heat-resistance resin and optionally a filler. In addition, the adhesive layer may include an adhesive resin and optionally a filler. The filler may be an organic filler, an inorganic filler, or combinations thereof. The heat-resistance resin and the adhesive resin may be any materials which may be used in the separator in the related art.

FIG. 1 is an exploded perspective view of a rechargeable lithium battery according to an embodiment of the present invention. The lithium secondary battery according to an embodiment is illustrated as a pouch battery, but is not limited thereto, and may include variously-shaped batteries such as a cylindrical battery and a prismatic pouch battery.

Referring to FIG. 1, a lithium secondary battery 100 according to an embodiment includes: a battery assembly including a positive electrode 114, a negative electrode 112 facing the positive electrode 114, a separator 113 disposed between the positive electrode 114 and the negative electrode 112, and an electrolyte (not shown) in which the positive electrode 114, the negative electrode 112, and the separator 113 are immersed; a battery case 120 housing the battery assembly; and a sealing member 140 sealing the battery case 120.

## MODE FOR PERFORMING THE INVENTION

Hereinafter, examples of the present invention and comparative examples are described. These examples, however, are not in any sense to be interpreted as limiting the scope of the invention.

(Comparative Example 1)

1.5 M $LiPF_6$ was dissolved in a non-aqueous organic solvent in which ethylene carbonate, propylene carbonate, ethyl propionate, and propyl propionate were mixed in a volume% of 20:10:30:40 to prepare an electrolyte for a lithium secondary cell.

(Example 1)

1.5 M $LiPF_6$ was dissolved in a non-aqueous organic solvent in which ethylene carbonate, propylene carbonate, ethyl propionate, and propyl propionate were mixed in a volume% of 20:10:30:40, and a sulfolane of Chemical Formula 1a as a first additive and a compound of Chemical Formula 2a as a second additive were added thereto, thereby preparing an electrolyte for a lithium secondary battery. Herein, the amount of sulfolane of Chemical Formula 1a as the first additive was set to be 5 wt% based on the total amount, 100 wt%, of the non-aqueous organic solvent and the lithium salt, the compound of Chemical Formula 2a as the second additive was set to be 0.5 wt% based on the total amount, 100 wt% of the non-aqueous organic solvent and the lithium salt, and thus, the mixing ratio of the first additive and the second additive was 10:1.

[Chemical Formula 1a]

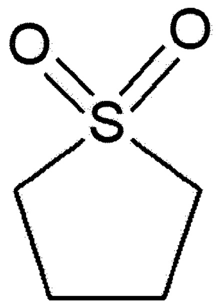

[Chemical Formula 2a]

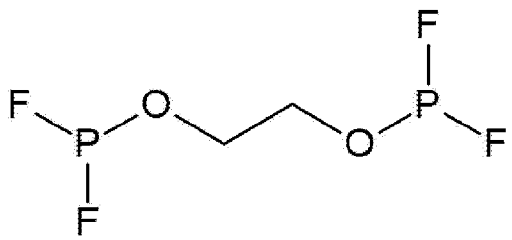

97 wt% of an artificial graphite negative active material, 1 wt% of a ketjen black conductive material, 1 wt% of a styrene-butadiene rubber binder, and 1 wt% of a carboxymethyl cellulose thickener were mixed in a distilled water solvent to prepare a negative active material slurry. The negative active material slurry was coated on a copper foil, dried, and pressurized to prepare a negative electrode.

96 wt% of a $LiCoO_2$ positive active material, 2 wt% of a ketjen black conductive material and 2 wt% of polyvinylidene fluoride were mixed in an N-methylpyrrolidone solvent to prepare a positive active material slurry. The positive active material slurry was coated on an aluminum foil and dried followed by pressurizing to prepare a positive electrode.

Using the electrolyte, the positive electrode, and the negative electrode, a 4.4 V grade pouch lithium secondary cell was fabricated according to the convention procedure.

(Examples 2 to 11 and Comparative Examples 2 to 5)

Electrolytes were prepared by the same procedure as in Example 1, except that the used amount of sulfolane of Chemical Formula 1a and the used amount of the compound of Chemical formula 2a were changed as shown in Table 1, and lithium secondary cells were fabricated by the same procedure as in Example 1, except that the electrolyte, and the negative electrode and the positive electrode of Example 1, were used.

(Table 1)

| | First additive of Chemical Formula 1a (wt%) | Second additive of Chemical Formula 2a (wt%) | Mixing ratio of first additive and second additive (weight ratio) |
|---|---|---|---|
| Comparative Example 1 | - | - | - |
| Comparative Example 2 | 0.05 | 0.5 | 0.1:1 |
| Comparative Example 3 | 10 | 0.5 | 20:1 |
| Example 1 | 5 | 0.5 | 10:1 |
| Example 2 | 2.5 | 0.5 | 5:1 |

(continued)

| | First additive of Chemical Formula 1a (wt%) | Second additive of Chemical Formula 2a (wt%) | Mixing ratio of first additive and second additive (weight ratio) |
|---|---|---|---|
| Example 3 | 1.5 | 0.5 | 3:1 |
| Example 4 | 1 | 0.5 | 2:1 |
| Example 5 | 0.5 | 0.5 | 1:1 |
| Example 6 | 0.25 | 0.5 | 0.5:1 |
| Comparative Example 4 | 1 | 10 | 0.1:1 |
| Comparative Example 5 | 5 | 0.25 | 20:1 |
| Example 7 | 5 | 1 | 5:1 |
| Example 8 | 5 | 2 | 2.5:1 |
| Example 9 | 5 | 3 | 1.67:1 |
| Example 10 | 5 | 5 | 1:1 |
| Example 11 | 2.5 | 5 | 0.5:1 |

Experimental Example 1: Evaluation of thickness increase ratio

The lithium secondary cells the Examples 1 to 11 and Comparative Examples 1 to 5 were constant current-constant voltage charged at 0.7 C, 4.4 V, and 0.05 C cut-off condition at 25 °C, and stored at 60 °C for 30 days. Thicknesses of the cells before storage (initial thickness) were measured and thicknesses of the cells after storing for 30 days were measured. From these results, the cell thickness increase ratio, were calculated, and the results, together with the initial thickness, and the thickness after being stored at 60 °C for 30 days are shown in Table 2.

[Equation 1]

Thickness increase ratio of thickness [%] = [(Cell thickness after 30 days at 60 °C – Cell thickness before storage)/ Cell thickness before storage] X 100

Experimental Example 2: Evaluation of capacity retention and capacity recovery

The lithium secondary cells allowed to stand at a high temperature (60 °C) for 30 days according to Experimental Example 1 were discharged at 0.2 C to 3.0 V at room temperature (25 °C) under a constant current condition to measure a discharge capacity.

Thereafter, in order to evaluate capacity recovery, the lithium secondary cells in which discharge capacity test was performed, were recharged at 0.2 C to 4.4 V under a constant current condition and under a constant voltage with an end current of 0.05 C, and discharged at 0.2 C to 3.0 V under a constant current condition to measure a discharge capacity. In addition, capacity recovery was calculated according to Equation 2 and the results are shown in Table 2.

[Equation 2]

Capacity recovery [%] = [Discharge capacity of the recharged lithium secondary cell after allowing to stand at a high temperature / Initial discharge capacity before allowing to stand at a high temperature] X 100

(Table 2)

| | Mixing ratio of first additive and second additive (weight ratio) | Initial thickness (mm) | Thickness after 60 °C for 30 days (mm) | Thickness Increase ratio (%) | Capacity retention (%) | Capacity recovery (%) |
|---|---|---|---|---|---|---|
| Comparative Example 1 | - | 5.29 | 6.12 | 15.7 | 85.0 | 95.0 |
| Comparative Example 2 | 0.1:1 | 5.30 | 6.10 | 15.1 | 85.0 | 95.2 |
| Comparative Example 3 | 20:1 | 5.90 | 6.30 | 6.8 | 88.0 | 96.5 |
| Example 1 | 10:1 | 5.41 | 5.54 | 2.4 | 89.0 | 97.0 |
| Example 2 | 5:1 | 5.33 | 5.50 | 3.2 | 88.3 | 96.8 |
| Example 3 | 3:1 | 5.33 | 5.55 | 4.1 | 88.5 | 96.5 |
| Example 4 | 2:1 | 5.32 | 5.70 | 7.1 | 88.2 | 95.5 |
| Example 5 | 1:1 | 5.30 | 5.78 | 9.1 | 88.2 | 95.0 |
| Example 6 | 0.5:1 | 5.28 | 5.80 | 9.8 | 88.5 | 95.0 |
| Comparative Example 4 | 0.1:1 | 5.70 | 6.20 | 8.8 | 83.0 | 93.0 |
| Comparative Example 5 | 20:1 | 5.30 | 6.12 | 15.5 | 84.0 | 95.3 |
| Example 6 | 10:1 | 5.32 | 6.00 | 12.8 | 85.0 | 95.0 |
| Example 7 | 5:1 | 5.31 | 5.48 | 3.2 | 88.5 | 97.0 |
| Example 8 | 2.5:1 | 5.30 | 5.51 | 4.0 | 88.3 | 96.8 |
| Example 9 | 1.67:1 | 5.41 | 5.61 | 3.7 | 88.2 | 96.9 |
| Example 10 | 1:1 | 5.47 | 5.63 | 2.9 | 88.0 | 96.8 |
| Example 11 | 0.5:1 | 5.45 | 5.65 | 3.7 | 88.0 | 96.0 |

As shown in Table 2, Examples 1 to 11 in which the electrolyte with the first and second additives at a 0.5 1 to 10:1 by weight ratio was used, exhibited a surprisingly low thickness increase ratio at high temperature storage, while the good capacity retention and capacity recovery were maintained, and thus, the amount of gas generated at high temperature storage was effectively decreased.

Whereas, Comparative Example 1 using the electrolyte without the first and the second additives exhibited extremely high thickness increase ratio, and Comparative Example 2 and Comparative Example 4 using the electrolytes at a too small amount of the first additive at a mixing ratio of 0.1:1 exhibited insufficiently reduction in thickness increase ratio. Furthermore, Comparative Examples 3 and 5 using the electrolyte with the first additive at a too large amount exhibited lower reduction effects in thickness increase ratio at high temperature storage, than Examples.

While this invention has been described in connection with what is presently considered to be practical example embodiments, it is to be understood that the invention is not limited to the disclosed embodiments, but, on the contrary,

is intended to cover various modifications and equivalent arrangements included within the spirit and scope of the appended claims. Therefore, the aforementioned embodiments should be understood to be examples but not limiting the present invention in any way.

## Claims

1. A non-aqueous electrolyte for a lithium secondary battery, comprising:

   a non-aqueous organic solvent;
   a lithium salt; and
   a first additive represented by Chemical Formula 1 and a second additive represented by Chemical Formula 2, wherein a mixing ratio of the first additive and the second additive is 0.5:1 to 10:1 by weight:

   [Chemical Formula 1]

   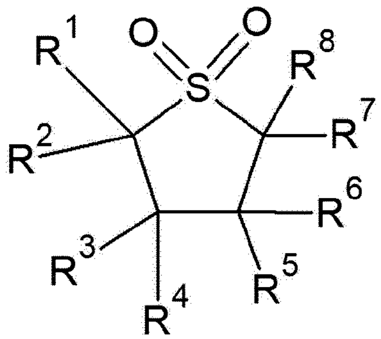

   (in Chemical Formula 1,
   $R^1$ to $R^8$ are each independently a hydrogen atom, a substituted or unsubstituted C1 to C30 alkyl group, a substituted or unsubstituted C2 to C30 alkenyl group, a substituted or unsubstituted C2 to C30 alkynyl group, a substituted or unsubstituted C3 to C30 cycloalkyl group, a substituted or unsubstituted C3 to C30 cycloalkenyl group, a substituted or unsubstituted C3 to C30 cycloalkynyl group, or a substituted or unsubstituted C6 to C30 aryl group;)

   [Chemical Formula 2]

   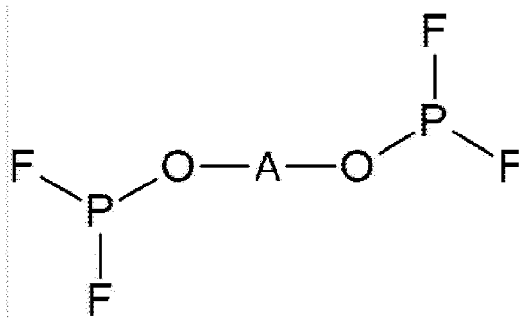

   (in Chemical Formula 2, A is a substituted or unsubstituted aliphatic a chain or $(-C_2H_4-O-C_2H_4-)_n$, and n is an integer of 1 to 10.)

2. The non-aqueous electrolyte for a lithium secondary battery of claim 1, wherein the $R^1$ to $R^8$ are each independently a hydrogen atom, a substituted or unsubstituted C1 to C10 alkyl group, a substituted or unsubstituted C2 to C10 alkenyl group, a substituted or unsubstituted C2 to C10 alkynyl group, a substituted or unsubstituted C3 to C10 cycloalkyl group, a substituted or unsubstituted C3 to C10 cycloalkenyl group, a substituted or unsubstituted C3 to

C10 cycloalkynyl group, or a substituted or unsubstituted C6 to C10 aryl group.

**3.** The non-aqueous electrolyte for a lithium secondary battery of claim 1, wherein the mixing ratio of the first additive and the second additive is 0.5:1 to 5:1 by weight.

**4.** The non-aqueous electrolyte for a lithium secondary battery of claim 1, wherein an amount the first additive is 0.25 wt% or more and less than 10 wt% when amounts of the non-aqueous organic solvent and the lithium salt are to be 100 wt%.

**5.** The non-aqueous electrolyte for a lithium secondary battery of claim 4, wherein an amount of the first additive is 0.5 wt% to 5 wt%, when amounts of the non-aqueous organic solvent and the lithium salt are to be 100 wt%.

**6.** The non-aqueous electrolyte for a lithium secondary battery of claim 1, wherein an amount of the second additive is 0.1 wt% or more and less than 10 wt%, when amounts of the non-aqueous organic solvent and the lithium salt is to be 100 wt%.

**7.** The non-aqueous electrolyte for a lithium secondary battery of claim 6, wherein an amount of the second additive may be 0.1 wt% to 5 wt%, when amounts of the non-aqueous organic solvent and the lithium salt is to be 100 wt%.

**8.** The non-aqueous electrolyte for a lithium secondary battery of claim 1, wherein the non-aqueous organic solvent includes a propionate-based solvent.

**9.** The non-aqueous electrolyte for a lithium secondary battery of claim 8, wherein the propionate-based solvent is methyl propionate, ethyl propionate, propyl propionate, or combinations thereof.

**10.** The non-aqueous electrolyte for a lithium secondary battery of claim 8, wherein an amount of the propionate-based solvent is 30 volume% to 80 volume% based on the total volume of the non-aqueous organic solvent.

**11.** A lithium secondary battery, comprising:

a non-aqueous electrolyte of any one of claim 1 to claim 10;
a positive electrode; and
a negative electrode.

FIG. 1

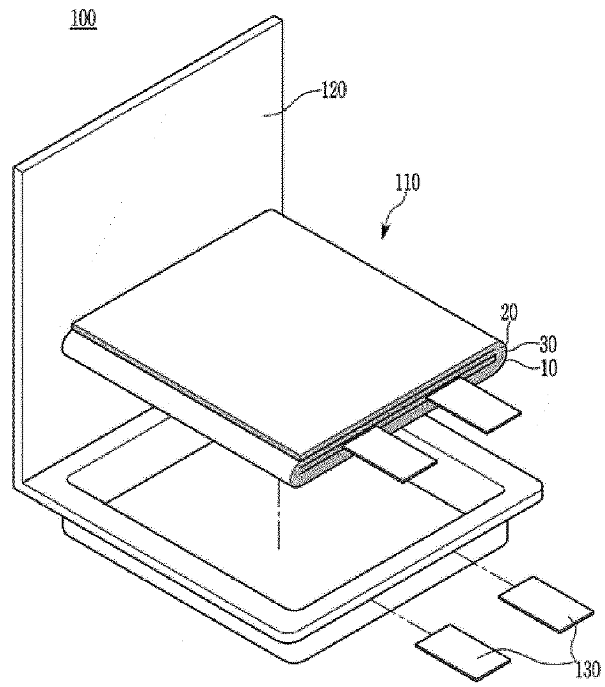

**INTERNATIONAL SEARCH REPORT**

International application No.
**PCT/KR2021/013943**

**A. CLASSIFICATION OF SUBJECT MATTER**

**H01M 10/0567**(2010.01)i; **H01M 10/0569**(2010.01)i; **H01M 10/052**(2010.01)i

According to International Patent Classification (IPC) or to both national classification and IPC

**B. FIELDS SEARCHED**

Minimum documentation searched (classification system followed by classification symbols)

H01M 10/0567(2010.01); H01M 10/052(2010.01); H01M 10/0525(2010.01); H01M 10/0569(2010.01); H01M 6/16(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 비수성 유기용매(non-aqueous organic solvent), 첨가제 (additive), 술포란(sulfolane), 1,2-비스(디플루오로포스파닐)옥시에탄(1,2-bis((difluorophosphaneyl)-oxy)ethane)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2019-0140676 A (SK INNOVATION CO., LTD.) 20 December 2019 (2019-12-20) See claims 1, 6 and 8-10; paragraph [0182]; example 1; and table 2, example 13. | 1-11 |
| Y | KR 10-2013-0054214 A (LG CHEM, LTD.) 24 May 2013 (2013-05-24) See claims 1, 2, 4, 8 and 10; paragraph [0022]; and example 1. | 1-11 |
| Y | KR 10-2018-0036340 A (SAMSUNG SDI CO., LTD.) 09 April 2018 (2018-04-09) See claims 1-8; paragraphs [0030] and [0044]; and example 1. | 1-11 |
| Y | JP 6332033 B2 (NEC CORPORATION) 30 May 2018 (2018-05-30) See claim 1; and paragraphs [0022], [0058]-[0067], [0072], [0086], [0094] and [0104]. | 1-11 |
| Y | JP 2000-285928 A (SANYO ELECTRIC CO., LTD.) 13 October 2000 (2000-10-13) See claims 1-3; paragraphs [0009], [0011], [0015], [0038] and [0039]; and example 1. | 1-11 |

☐ Further documents are listed in the continuation of Box C.    ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 January 2022** | **24 January 2022** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2019)

**INTERNATIONAL SEARCH REPORT**
**Information on patent family members**

International application No.
**PCT/KR2021/013943**

| Patent document cited in search report | Publication date (day/month/year) | Patent family member(s) | Publication date (day/month/year) |
|---|---|---|---|
| KR 10-2019-0140676 A | 20 December 2019 | CN 110600801 A | 20 December 2019 |
| | | US 2019-0379086 A1 | 12 December 2019 |
| KR 10-2013-0054214 A | 24 May 2013 | CN 103947030 A | 23 July 2014 |
| | | EP 2755272 A1 | 16 July 2014 |
| | | EP 2755272 A4 | 08 April 2015 |
| | | EP 2755272 B1 | 18 April 2018 |
| | | JP 2014-528639 A | 27 October 2014 |
| | | JP 5894674 B2 | 30 March 2016 |
| | | US 2014-0242472 A1 | 28 August 2014 |
| | | US 9590272 B2 | 07 March 2017 |
| | | WO 2013-073901 A1 | 23 May 2013 |
| KR 10-2018-0036340 A | 09 April 2018 | CN 109792085 A | 21 May 2019 |
| | | CN 109792085 B | 24 September 2021 |
| | | EP 3522287 A1 | 07 August 2019 |
| | | EP 3522287 A4 | 29 July 2020 |
| | | US 10916806 B2 | 09 February 2021 |
| | | US 10985404 B2 | 20 April 2021 |
| | | US 11038203 B2 | 15 June 2021 |
| | | US 11038204 B2 | 15 June 2021 |
| | | US 11056719 B2 | 06 July 2021 |
| | | US 11056720 B2 | 06 July 2021 |
| | | US 2019-0252724 A1 | 15 August 2019 |
| | | US 2020-0052333 A1 | 13 February 2020 |
| | | US 2020-0052334 A1 | 13 February 2020 |
| | | US 2020-0052335 A1 | 13 February 2020 |
| | | US 2020-0052336 A1 | 13 February 2020 |
| | | US 2020-0052337 A1 | 13 February 2020 |
| | | US 2021-0005932 A1 | 07 January 2021 |
| | | WO 2018-062719 A1 | 05 April 2018 |
| JP 6332033 B2 | 30 May 2018 | BR 112014030119 A2 | 27 June 2017 |
| | | CN 104364958 A | 18 February 2015 |
| | | CN 104364958 B | 17 October 2017 |
| | | CN 104798245 A | 22 July 2015 |
| | | CN 104798245 B | 23 June 2017 |
| | | CN 107742743 A | 27 February 2018 |
| | | EP 2858164 A1 | 08 April 2015 |
| | | EP 2858164 A4 | 17 February 2016 |
| | | EP 2858164 B1 | 17 January 2018 |
| | | EP 2924796 A1 | 30 September 2015 |
| | | EP 2924796 A4 | 18 May 2016 |
| | | EP 2924796 B1 | 18 April 2018 |
| | | JP 6187458 B2 | 30 August 2017 |
| | | JP 6252486 B2 | 27 December 2017 |
| | | US 10177413 B2 | 08 January 2019 |
| | | US 2015-0140443 A1 | 21 May 2015 |
| | | US 2015-0303521 A1 | 22 October 2015 |
| | | US 9905887 B2 | 27 February 2018 |
| | | WO 2013-183655 A1 | 12 December 2013 |
| | | WO 2014-080870 A1 | 30 May 2014 |
| | | WO 2014-080871 A1 | 30 May 2014 |

Form PCT/ISA/210 (patent family annex) (July 2019)

**INTERNATIONAL SEARCH REPORT**
**Information on patent family members**

International application No.
**PCT/KR2021/013943**

| Patent document cited in search report | Publication date (day/month/year) | Patent family member(s) | Publication date (day/month/year) |
|---|---|---|---|
| JP 2000-285928 A | 13 October 2000 | None | |

Form PCT/ISA/210 (patent family annex) (July 2019)